# EUROPÄISCHE PATENTSCHRIFT

(11) **EP 1 001 279 B1**
(45) Veröffentlichungstag und Bekanntmachung des Hinweises auf die Patenterteilung: **01.02.2006**
(21) Anmeldenummer: 99116302.3
(22) Anmeldetag: 19.08.1999
(51) Int. Cl.: G01V 8/10

(54) **Verfahren zur Minenerkennung**
Method for mine recognition
Procédé de reconnaissance des mines

(30) Priorität: 13.11.1998 DE 19852344
(43) Veröffentlichungstag der Anmeldung: 17.05.2000
(73) Patentinhaber: EADS Deutschland GmbH, 85521 Ottobrunn (DE)
(72) Erfinder: Obkircher, Bernt, Dr., 88263 Horgenzell (DE)
(74) Vertreter: Meel, Thomas

(56) Entgegenhaltungen:
- US-A- 3 992 571
- US-A- 5 543 917
- FILIPPIDIS A ET AL: "Degree of familiarity ART2 in fuzzy fusion landmine detection" KNOWLEDGE-BASED INTELLIGENT ELECTRONIC SYSTEMS, 1998. PROCEEDINGS KES '98. 1998 SECOND INTERNATIONAL CONFERENCE ON ADELAIDE, SA, AUSTRALIA 21-23 APRIL 1998, NEW YORK, NY, USA,IEEE, US, 21. April 1998 (1998-04-21), Seiten 359-363, XP010310072 ISBN: 0-7803-4316-6
- BARBOUR BLAIR ET AL: "Novel polarimetric sensors for remote sensing and astronomical observation" ADVANCED TECHNOLOGY OPTICAL/IR TELESCOPES VI;KONA, HI, UNITED STATES MAR 23-25 1998, Bd. 3352, 1998, Seiten 833-838, XP008013197 Proc SPIE Int Soc Opt Eng;Proceedings of SPIE - The International Society for Optical Engineering 1998

## Beschreibung

Die Erfindung betrifft ein Verfahren zur Erkennung von Minen, und zwar speziell solcher Minen, die offen im Gelände verlegt sind.

Bekannt sind Verfahren, die im optischen und/oder Infrarot - Bereich das Gelände absuchen, wobei ein Betrachter an einem Monitor versucht, die Minen am Kontrastunterschied zum Hintergrund zu erkennen.

Darüber hinaus sind auch Verfahren bekannt, bei denen das Gelände mit einer IR-Kamera mit vorgeschaltetem Polarisationsfilter untersucht wird, damit ein Betrachter am Monitor Minen am dann eventuell größeren Kontrast zum Hintergrund erkennen kann ('Passive IR polarization sensors: a new technology for mine detection', Blair A. Barbour et al. und 'Laid and flush-buried mines detection using 8-12 µm polarimetric imager', M. Larive et al., beide: part of SPIE Conference on Detection and Remediation Technologies for Mines and Minelike Targets III, Orlando, Florida, april 1998). Bei diesen Verfahren besteht eine relativ geringe Erkennungswahrscheinlichkeit, da einerseits die Minen im optischen mit unauffälliger Farbe versehen sind bzw. im Infraroten selten ein ausreichender Temperaturkontrast zum Hintergrund besteht und andererseits Steine und andere Objekte aufgrund ihres Temperaturkontrastes fälschlicherweise als Minen angesprochen werden.

In der US 5,543,917 ist ein Verfahren zur Erkennung menschengemachter Gegenstände, wie z.B. Fahrzeuge oder Flugzeuge, vor einem natürlichen Hintergrund beschrieben. Dabei werden unter schrägem Beobachtungswinkel zwei Szenebilder mit jeweils vorgeschaltetem Polarisationsfiltern erzeugt, wobei die Polarisationsfilter relativ zueinander gekreuzt sind. Anschließend werden die Intensitätswerte der beiden erzeugten Szenebilder pixelweise subtrahiert. Auf einem Monitor werden nur diejenigen Pixel der Szene dargestellt, deren zugeordnete Intensitätsdifferenzen in einen manuell vorgegebenen Wertebereich fallen.

In der US 3,992,571 ist ein optisches System zur Detektion differentieller Polarisationsphänomene beschrieben. Damit werden unter schrägem Beobachtungswinkel zwei Szenebilder mit jeweils vorgeschaltetem Polarisationsfilter erzeugt, wobei die Polarisationsfilter relativ zueinander gekreuzt sind. Anschießend wird über der gesamten Szene der Polarisationsgrad, errechnet aus der Differenz der Intensitätswerte der Szenebilder geteilt durch die Summe der Intensitätswerte der Szenebilder ermittelt. Der Polarisationsgrad wird oberhalb einer vorgegebenen Schwelle farbkodiert und einem herkömmlichen Bild der Szene überlagert.

Aufgabe der vorliegenden Erfindung ist es, ein Verfahren zur Minenerkennung zu schaffen, mit dem anhand eines Monitors minenverdächtige Gegenstände als solche automatisch und zuverlässig erkannt werden können.

Diese Aufgabe wird mit dem Gegenstand des Anspruchs 1 gelöst. Vorteilhafte Ausführungen der Erfindung sind Gegenstand von Unteransprüchen.

Die Erfindung wird anhand eines Ausführungsbeispiels unter Bezugnahme auf eine Zeichnung näher erläutert.

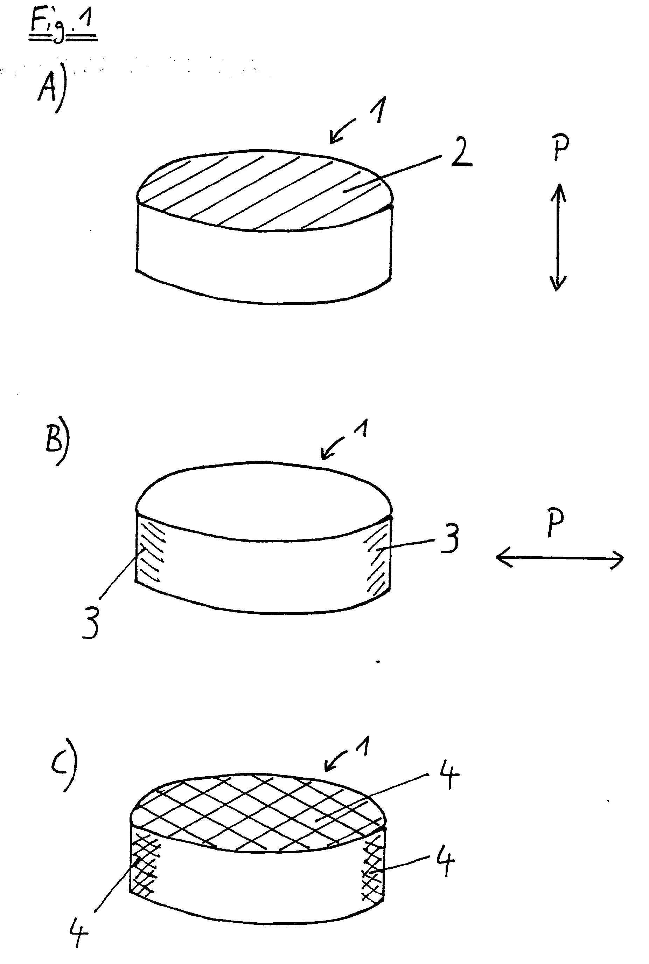

Natürliche, d.h. thermische IR-Strahlung ist im allgemeinen unpolarisiert. Dies gilt jedoch nur, wenn der Abstrahlwinkel relativ zur abstrahlenden Oberfläche groß ist. Betrachtet man eine Oberfläche im Infraroten unter geringem Ausfallswinkel, so ist nach den Gesetzen von Fresnel die Schwingungsebene des E-Vektors der austretenden Strahlung parallel zur Oberfläche festgelegt, d.h. die Strahlung ist linear polarisiert. Der Polarisationsgrad ist um so größer, je kleiner der Abstrahlwinkel ist. So gibt der Polarisationsgrad einer IR-Strahlung Auskunft über die Orientierung der Oberfläche relativ zum Beobachter, wenn die Oberfläche innerhalb des Footprints (Objektfläche, die auf ein Pixel abgebildet wird) eines Kamera-Pixels eine einheitliche Ausrichtung hat. Dies ist bei menschengemachten Gegenständen mit glatten Oberflächen im allgemeinen der Fall. Natürliche Gegenstände wie Gras, Erde, Steine, Holz, alle Arten von Vegetation, Felsen usw. haben aber eine relativ zur Wellenlänge rauhe Oberfläche, so daß sich bei Betrachtung dieser Gegenstände die Polarisationsanteile der einzelnen Oberflächenanteile gegenseitig ausgleichen mit der Folge, daß die IR-Strahlung dieser Objekte beim Beobachter als unpolarisiert erscheint.
Ein z.B. scheibenförmiges Objekt 1 mit glatter Oberfläche, wie es in Fig. 1 dargestellt ist, das schräg im Beobachtungsstrahlengang liegt, hat bei senkrechter Polarisation (Fig. 1, A) daher nur eine schwache Abstrahlung an der oberen Stirnfläche 2. Die Polarisationsebene P ist am rechten Rand der Zeichnung eingezeichnet.
Umgekehrt weist es an den Seitenflächen 3 bei waagrechter Polarisation (Fig. 1, B) eine geringe Intensität auf.
Nach dem erfindungsgemäßen Verfahren werden beide Bilder im Rechner gespeichert und deren Intensitäten pixelweise addiert. Das dabei entstehende Summenbild entspricht dem normalen IR-Bild, das ohne Polarisationsfilter aufgenommen worden wäre. Zusätzlich wird in einem Rechner das Differenzbild der beiden Bilder durch pixelweises Subtrahieren der Intensitätswerte gebildet. Alle Pixel im Differenzbild, auf denen keine Polarisationseffekte auftreten, haben dann etwa die Intensität null, während die Seitenflächen 3 des Objektes eine hohe, positive und die Stirnfläche 2 eine stark negative Intensität aufweisen. Diese Pixel erkennt ein Rechner automatisch, wenn er für das Differenzbild ein Histogramm errechnet, in dem die Häufigkeitsverteilung der Intensitäten dargestellt ist.
Zum Beispiel kann auf der Abszisse des Histogramms die Intensität aufgetragen werden, und auf der Ordinate die Häufigkeit, mit der eine Intensität bei den einzelnen Pixeln des Differenzbilds auftritt. In dem Histogramm wird typischerweise ein ausgeprägter Peak im Bereich der Intensität null vorhanden sein, da die menschengemachten Gegenstände nur einen geringen Teil des Gesichtsfelds einnehmen.
Es wird ein fester Schwellwert, der einem bestimmten Intensitätsunterschied zwischen den Pixeln der beiden Geländebilder entspricht, festgelegt. Alle Pixel des Differenzbilds, deren Intensität betragsmäßig über diesem Schwellwert liegen, werden als minenverdächtige Pixel deklariert.
Der Schwellwert kann z.B. proportional zu der Standardabweichung der Intensitätsverteilung in dem obengenannten Histogramm gebildet werden.
Nach Berechnung der Standardabweichung bestimmt der Computer alle diejenigen Pixel, deren Intensität größer als der Schwellwert ist. Diese Pixel 4 werden im Summenbild (Fig. 1, C) automatisch bei der Anzeige auf einem Monitor markiert. Diese Markierung kann farbig sein oder ein markantes, die infrage kommenden Pixel umschreibendes Symbol. Damit wird ein Betrachter des Bildes am Monitor automatisch auf minenverdächtige Gegenstände aufmerksam gemacht. Dies gilt auch dann, wenn etwa ein solcher Gegenstand gar keinen Kontrast zum Hintergrund aufweist und sonst übersehen worden wäre. Umgekehrt werden Gegenstände mit rauher Oberfläche, wie z.B. Steine, nicht markiert, die sonst aufgrund ihres möglicherweise hohen Kontrastes zum Hintergrund als Mine angesprochen worden wären.

Eine automatische Erkennung von im Gelände verteilten Gegenständen mit glatter Oberfläche ist demnach möglich, wenn
- man eine schräge Beobachtungsrichtung wählt,
- man mindestens zwei kreuzpolare Aufnahmen des Sehfeldes macht,
- man die kreuzpolaren Bilder im Rechner bearbeitet, indem man z.B. das Differenzbild errechnet und in diesem diejenigen Pixel sucht, deren Intensität betragsmäßig größer als ein bestimmter Schwellwert ist,
- man das Summenbild darstellt und darin diese gefundenen Pixel auf beliebige Weise auffällig markiert.

Die Aufnahme der Geländebilder sollte vorteilhaft eine möglichst hohe Auflösung haben, z.B. eine Temperaturauflösung mit 12 bit Wortlänge.

Die Aufnahme der Geländebilder kann vorteilhaft im Infraroten Spektralbereich erfolgen. Da die oben beschriebenen physikalischen Effekte, auf der die Erfindung basiert, prinzipiell bei jeder Wellenlänge des elektromagnetischen Spektrums auftreten, kann auch in anderen Frequenzbereichen, z.B. im sichtbaren Bereich, gearbeitet werden.

Anstatt der Generierung eines Differenzbildes kann in einer alternativen Ausführung der Erfindung auch der Quotient aus den beiden Geländebilder gebildet werden, in dem Pixel für Pixel die Intensitätswerte der beiden Geländebilder durcheinander geteilt werden.

Die Minenerkennung mit Hilfe des erfindungsgemäßen Verfahrens kann vorteilhaft von einem Fluggerät oder Fahrzeug aus durchgeführt werden. Das zu überwachende Gelände wird dabei von einer bordeigenen IR-Kamera unter einem schrägen Winkel (z.B. 30° bis 50°) beobachtet.

## Patentansprüche

1. Verfahren zur Erkennung von Minen im Gelände, mit folgenden Verfahrensschritten:
- Erzeugung vom zwei Geländebildern mit jeweils vorgeschaltetem Polarisationsfilter, wobei die Polarisationsfilter relativ zueinander gekreuzt sind, und die Bilder unter schrägem Beobachtungswinkel erzeugt werden;
- Erzeugung eines Summenbilds durch pixelweise Addition der beiden Geländebilder;
- Pixelweiser Vergleich der beiden Geländebilder durch Generierung eines Vergleichswertes, welcher ein Maß für den Intensitätsunterschied zwischen den jeweils verglichenen Pixeln der beiden Geländebilder darstellt;
- Ermittlung derjenigen Pixel, deren Vergleichswert über einem vorbestimmten Schwellenwert liegt, wobei der Schwellenwert einem bestimmten betragsmäßigen Intensitätsunterschied entspricht und der Schwellwert anhand eines Histogramms der Häufigkeitsverteilung der Intensitätsunterschiede zwischen den jeweils verglichenen Pixeln der Geländebilder ermittelt wird;
- Markierung der so ermittelten Pixel im Summenbild.

2. Verfahren nach Anspruch 1, **dadurch gekennzeichnet, daß** der Vergleichswert durch pixelweise Subtraktion der Intensitätswerte der beiden Geländebilder generiert wird.

3. Verfahren nach Anspruch 1 oder 2, **dadurch gekennzeichnet, daß** die Geländebilder mittels einer Infrarot-Kamera erzeugt werden.

## Claims

1. Method for recognition of mines in the terrain, having the following method steps:
- production of two terrain images each with an upstream polarization filter, with the polarization filters being crossed relative to one another, and the images being produced at an inclined observation angle;
- production of a sum image by pixel-by-pixel addition of the two terrain images;
- pixel-by-pixel comparison of the two terrain images by generation of a comparison value which represents a measure of the intensity difference between the respectively compared pixels from the two terrain images;
- determination of those pixels whose comparison value is above a predetermined threshold value, with the threshold value corresponding to a specific magnitude of the intensity difference, and with the threshold value being determined on the basis of a histogram of the probability distribution of the intensity differences between the respectively compared pixels in the terrain images;
- marking of the pixels determined in this way in the sum image.

2. Method according to Claim 1, **characterized in that** the comparison value is generated by pixel-by-pixel subtraction of the intensity values of the two terrain images.

3. Method according to Claim 1 or 2, **characterized in that** the terrain images are produced by means of an infrared camera.

## Revendications

1. Procédé de reconnaissance de mines sur le terrain, comportant des étapes de procédé suivantes:
- génération de deux images de terrain avec à chaque fois un filtre polarisateur raccordé en amont, les filtres polarisateurs étant croisés l'un par rapport à l'autre, et les images étant générées sous un angle d'observation oblique;
- génération d'une image somme par addition pixel par pixel des deux images de terrain;
- comparaison pixel par pixel des deux images de terrain par génération d'une valeur de comparaison qui représente une mesure pour la différence d'intensités entre les pixels des deux images de terrain qui sont à chaque fois comparés;
- détermination des pixels dont la valeur de comparaison est supérieure à une valeur de seuil, la valeur de seuil correspondant à une différence quantifiée déterminée d'intensités et la valeur de seuil étant déterminée au moyen d'un hologramme de la distribution de fréquences des différences d'intensités entre les pixels des images de terrain qui sont à chaque fois comparés;
- marquage des pixels ainsi déterminés dans l'image somme .

2. Procédé selon la revendication 1, **caractérisé en ce que** la valeur de comparaison est générée par soustraction pixel par pixel des valeurs d'intensité des deux images de terrain.

3. Procédé selon la revendication 1 ou 2, **caractérisé en ce que** les images de terrain sont générées au moyen d'une caméra infrarouge.
